(19) Europäisches Patentamt
European Patent Office
Office européen des brevets

(11) **EP 4 293 889 A1**

(12) **EUROPEAN PATENT APPLICATION**
published in accordance with Art. 153(4) EPC

(43) Date of publication:
**20.12.2023 Bulletin 2023/51**

(51) International Patent Classification (IPC):
**H02M 1/42** (2007.01)

(21) Application number: **21943380.2**

(52) Cooperative Patent Classification (CPC):
**H02M 1/42**

(22) Date of filing: **31.05.2021**

(86) International application number:
**PCT/CN2021/097149**

(87) International publication number:
**WO 2022/251999 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Zhejiang Geely Holding Group Co., Ltd.**
**Hangzhou, Zhejiang 310051 (CN)**
• **Geely Automobile Research Institute
(Ningbo) Co., Ltd**
**Ningbo, Zhejiang 315336 (CN)**

(72) Inventors:
• ZHAO, Kaihong
Ningbo, Zhejiang 315336 (CN)
• GUO, Shuibao
Ningbo, Zhejiang 315336 (CN)
• WANG, Yiqiang
Ningbo, Zhejiang 315336 (CN)

(74) Representative: **Dai, Simin**
**Reyda IP**
**157, Quai du Président Roosevelt**
**Appt A073**
**92130 Issy-les-Moulineaux (FR)**

(54) **PFC FAST DYNAMIC RESPONSE CONTROL METHOD AND SYSTEM**

(57) The present application relates to a PFC fast dynamic response control method and system. The control method includes: constructing an output voltage controller, tracking and correcting the output voltage of the PFC circuit by the output voltage controller; constructing a load current feed-forward controller, by using the load current feed-forward controller, estimating the feed-forward peak current and accumulating the estimated feed-forward peak current with an output of the output voltage controller to determine the input current reference peak value; performing current loop control based on the input current reference peak value to determine a switch signal of a power electronic switch device in the PFC circuit, and controlling the power electronic switch device to be turned on and off based on the switch signal. Compared with the related art, the present application has advantages of fast dynamic response, small input current harmonic component and the like.

FIG. 1

**EP 4 293 889 A1**

**Description**

**TECHNICAL FIELD**

The present application relates to a field of Power Factor Correction (PFC) control technology, in particular to PFC fast dynamic response control methods and systems.

**BACKGROUND**

The pre-stage switching power supply of the on-board charging system often adopts a single-phase PFC circuit, an input end thereof is the mains power, and an output end thereof is a rear-stage of the on-board charging system, which is connected to the high-voltage battery pack.

At present, the on-board charging system needs to supply power to the car heater (Positive Temperature Coefficient, PTC) module, the load thereof is no longer as stable as only charging the battery, and there is a process of step change, thus the requirements for dynamic performance become higher. The dynamic performance of the on-board charging system is mainly determined by the energy storage capacitor at the output of the hardware and the system control algorithm. However, the capacity of the energy storage capacitor is limited by the hardware cost and power density, and its capacity is limited, thus the dynamic performance is mainly optimized by the system control algorithm.

When the load changes dynamically, the bus voltage in the PFC will change. If the change is too severe, overvoltage or undervoltage will occur. Both of these situations may cause damage to the rectifier bridge. From the PFC control algorithm, the key to dynamic adjustment is the control of the bus voltage loop, thus the dynamic response capability of the bus voltage loop is very important. At present, the common control method of the bus voltage loop is realized by the Proportional-Integral (PI) universal calibrator. When the load changes stepwise, the PI bandwidth is changed by determining that the voltage deviation is greater than a certain threshold. This PI control method has disadvantages such as slow dynamic response and large harmonic components of input current.

**SUMMARY**

The object of the present application is to provide a fast dynamic response control method and system for single-phase PFC with fast dynamic response and small harmonic component of an input current in order to overcome the defects of the above-mentioned related art.

The purpose of the present application can be achieved through the following technical solutions.

A PFC fast dynamic response control method, the method includes:

constructing an output voltage controller, tracking and correcting an output voltage of a PFC circuit by the output voltage controller;
constructing a load current feed-forward controller, by using the load current feed-forward controller, estimating a feed-forward peak current and accumulating the feed-forward peak current with an output of the output voltage controller to determine an input current reference peak value; and
performing current loop control based on the input current reference peak value to determine a switch signal of a power electronic switch device in the PFC circuit, and controlling the power electronic switch device to be turned on and off based on the switch signal.

In some embodiments, estimating the feed-forward peak current includes:

sampling circuit parameters and a control parameter of the PFC circuit, where the circuit parameters include an input voltage, an input current and an output voltage, and the control parameter includes a real-time Pulse-Width Modulation (PWM) duty cycle;
processing the input voltage, the input current and the output voltage respectively to obtain an effective value of the input voltage, an actual value of the output voltage and an actual value of the input current;
obtaining a load current estimated value based on the actual value of the output voltage, the actual value of the input current, and the real-time PWM duty cycle;
obtaining an estimated value of the feed-forward peak current based on the actual value of the output voltage, the load current estimated value and the effective value of the input voltage.

In some embodiments, obtaining the load current estimated value includes:

obtaining a current value flowing through a bus capacitor by differentiating the actual value of the output voltage and multiplying a differential coefficient;
obtaining an output current value of a PFC rectifier bridge by multiplying the actual value of the input current and the real-time PWM duty cycle; and
subtracting the current value flowing through the bus capacitor from the output current value of the PFC rectifier bridge to obtain the load current estimated value.

In some embodiments, the estimated value of the feed-forward peak current is obtained by following formula:

$$i_f = \frac{i_o \cdot v_{bus}}{v_{ACRMS}} \cdot C$$

where, $i_f$ indicates the estimated value of the feed-forward peak current, $i_o$ indicates the load current estimated value, $v_{bus}$ indicates the actual value of the output voltage, $v_{ACRMS}$ indicates the effective value of the input voltage, and $C$ indicates a conversion coefficient.

In some embodiments, the input current reference peak value is obtained by: accumulating the estimated feed-forward peak current and the output of the output voltage controller to obtain an original input current reference peak value, and filtering the input current original reference peak value to obtain the input current reference peak value.

In some embodiments, an Infinite Impulse Response (IIR) digital filter is adopted to filter the original input current reference peak, and a filter factor of the IIR digital filter is set to:

$$K = \frac{(F_{IN} - F_{OUT}) \cdot B}{F_{IN}}$$

where, $K$ indicates the filter factor, $F_{IN}$ indicates an input signal of the IIR digital filter, $F_{OUT}$ indicates an output signal of the IIR digital filter, and Vindicates a proportional coefficient.

A PFC fast dynamic response control system configured to control a PFC circuit, where the control system includes:

an output voltage controller configured to track and correct an output voltage of the PFC circuit;

a load current feed-forward controller, including a feed-forward peak current estimator and an input current reference peak estimator, where the feed-forward peak current estimator is configured to estimate a feed-forward peak current, and the input current reference peak estimator is configured to accumulate an estimated value of the feed-forward peak current with an output of the output voltage controller to determine an input current reference peak value; and

a current controller configured to perform current loop control based on the input current reference peak value to determine a switch signal of a power electronic switch device in a PFC circuit and control the power electronic switch device on and off.

In some embodiments, the feed-forward peak current estimator includes:

a sub-sampler configured to sample circuit parameters and a control parameter of the PFC circuit, where the circuit parameters include an input voltage, an input current and an output voltage, and where the control parameter includes a real-time PWM duty cycle;

a data sub-processor, configured to respectively process the input voltage, input current and the output voltage to obtain an effective value of the input voltage, an actual value of the output voltage and an actual value of the input current;

a load current sub-estimator, configured to obtain a load current estimated value based on the actual value of the output voltage, the actual value of the input current and the real-time PWM duty cycle; and

a feed-forward peak current sub-estimator, configured to obtain the estimated value of the feed-forward peak current based on the actual value of the output voltage, the load current estimated value and an effective value of the input voltage.

In some embodiments, the load current sub-estimator includes:

a first submodule for bus capacitor current estimation, configured to obtain a current value flowing through a bus capacitor by differentiating the actual value of the output voltage and multiplying a differential coefficient;

a second submodule for PFC rectifier bridge output current estimation, configured to estimate an output current value of a PFC rectifier bridge by multiplying the actual value of the input current and the real-time PWM duty cycle;

a third submodule for estimating a load current value, configured to subtract the current value flowing through the bus capacitor from the output current value of the PFC rectifier bridge to obtain the load current estimated value.

In some embodiments, the feed-forward peak current sub-estimator configured to calculate the estimated value of the feed-forward peak current by the following formula:

$$i_f = \frac{i_o \cdot v_{bus}}{v_{ACRMS}} \cdot C$$

where $i_f$ indicates the estimated value of the feed-forward peak current, $i_o$ indicates the load current estimated value, $v_{bus}$ indicates the actual value of the output voltage, $v_{ACRMS}$ indicates the effective value of the input voltage, and $C$ indicates a conversion coefficient.

In some embodiments, the input current reference peak estimator includes:

an original input current reference peak sub-estimator, configured to accumulate the estimated feed-forward peak current and the output of the output voltage controller to obtain an original input current reference peak value; and

a sub-filter configured to filter the original input current reference peak value to obtain the input current reference peak value.

In some embodiments, the sub-filter includes an IIR digital filter, and a filter factor of the IIR digital filter is set to:

$$K = \frac{(F_{IN} - F_{OUT}) \cdot B}{F_{IN}},$$

where, Vindicates the filter factor, $F_{IN}$ indicates an input signal of the IIR digital filter, $F_{OUT}$ indicates an output signal of the IIR digital filter, and Vindicates a proportional coefficient.

In some embodiments, the output voltage controller includes a Proportional-Integral (PI) controller.

In some embodiments, the PFC circuit includes a single-phase PFC circuit or a three-phase PFC circuit.

Compared with the related art, the present application has the following beneficial effects.

(1) In the present application, a load current feed-forward control is provided on the basis of traditional voltage control (PI control). The load current feed-forward control can quickly respond to a step change of the load, and realize the rapid response capability when the load is dynamically switched. At the same time, the load current feed-forward control has a function of suppressing the harmonic component of the input current control, and thus reducing the harmonic component of the input current.

(2) In the present application, only the input voltage, the input current and the output voltage of the PFC circuit are sampled, and replacing the hardware difficult to achieve feed-forward peak current sampling with estimation can save hardware costs and improve system reliability and flexibility.

(3) In the present application, an IIR digital filter is adopted to filter the original input current reference peak value, to filter out a power frequency ripple and high-frequency interference in the original input current reference peak value, and to obtain the input current reference peak value, such that the input current reference peak value is closer to a straight line within one power frequency cycle. The setting of the filter factor in the IIR digital filter can change the IIR cut-off frequency based on the change rate of the input value, so as to achieve a control purpose that the faster the change rate is, the faster the response is, and the slower the change rate is, the smaller the fluctuation is. The filter technology with variable bandwidth is used to ensure the dynamic and fast response capability and also ensure the sinusoidal index of the input current control.

## BRIEF DESCRIPTION OF THE DRAWINGS

FIG. 1 is a block flow diagram of a PFC fast dynamic response control method according to the present application.
FIG. 2 is a circuit topology diagram of a single-phase PFC circuit according to a first embodiment of the present application.
FIG. 3 is a schematic diagram of a PWM control sequence of a single-phase PFC circuit according to a first embodiment of the present application.
FIG. 4 is a mathematical model diagram of a single-phase PFC circuit according to a first embodiment of the present application.
FIG. 5 is a control block diagram that adopts the method of the present application for control according to a first embodiment of the present application.
FIG. 6 a dynamic response Matlab emulation waveform adopting traditional voltage PI control according to a first embodiment of the present application.
FIG. 7 a dynamic response Matlab emulation waveform adopting a control method of the present application according to a first embodiment of the present application.
FIG. 8 is a PFC fast dynamic response control system according to a second embodiment of the present application.

In the figures, the numerals are as follows: an output voltage controller 11, a load current feed-forward controller 12, a current controller 13, a sub-sampler 14, and an input voltage detector 15.

## DETAILED DESCRIPTION

The present invention will be described in detail below in conjunction with the accompanying drawings and specific embodiments. It is to be noted that the descriptions of the following embodiments are merely illustrations in nature, and the present application is not intended to limit the applicable objects or uses thereof, and the present application is not limited to the following embodiments.

First Embodiment

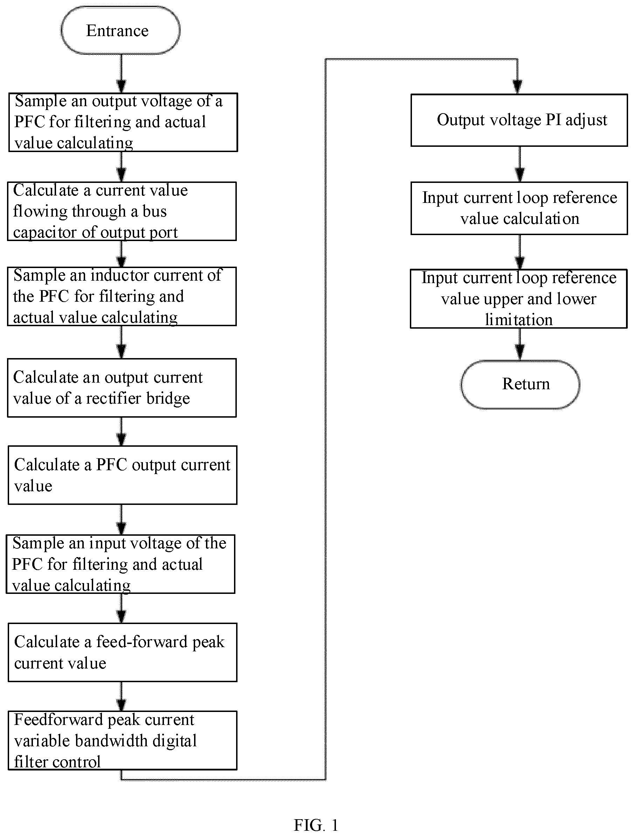

As shown in FIG. 1, in this embodiment, a PFC fast dynamic response control method is provided, the method includes the following three steps.

At step one, an output voltage controller 11 is constructed, the output voltage controller 11 is configured to track and correct an output voltage of a PFC circuit, where, the PFC circuit includes a single-phase PFC circuit or a three-phase PFC circuit.

At step two, a load current feed-forward controller 12 is constructed, the load current feed-forward controller 12 is configured to estimate the feed-forward peak current and accumulate the feed-forward peak current with an output of the output voltage controller 11 to determine an input current reference peak value.

In some embodiments:

Estimating the feed-forward peak current includes:

sampling circuit parameters and a control parameter of the PFC circuit, where the circuit parameters include an input voltage, an input current and an output voltage, and the control parameter includes a real-time PWM duty cycle;
processing the input voltage, the input current and the output voltage respectively to obtain an effective value of the input voltage, an actual value of the output voltage and an actual value of the input current;
obtaining a load current estimated value based on the actual value of the output voltage, the actual value of the input current and the real-time PWM duty cycle; and
obtaining an estimated value of the feed-forward peak current based on the actual value of the output voltage, the load current estimated value and the effective value of the input voltage.

Obtaining the load current estimated value includes:

obtaining a current value flowing through a bus capacitor by differentiating the actual value of the output voltage and multiplying a differential coefficient;
obtaining an output current value of a PFC rectifier bridge by multiplying the actual value of the input current and the real-time PWM duty cycle;
subtracting the current value flowing through the bus capacitor from the output current value of the PFC rectifier bridge to obtain the load current estimated value.

The estimated value of the feed-forward peak current is obtained by the following formula:

$$i_f = \frac{i_o \cdot v_{bus}}{v_{ACRMS}} \cdot C \quad ,$$

where $i_f$ indicates the estimated value of the feed-forward peak current, $i_o$ indicates the load current estimated value, $v_{bus}$ indicates the actual value of the output voltage, $v_{ACRMS}$ indicates the effective value of the input voltage, and C indicates a conversion coefficient.

The input current reference peak value is obtained by accumulating the estimated feed-forward peak current and the output of the output voltage controller 11 to obtain an original input current reference peak value, and filtering the input current original peak value to obtain the input current reference peak value.

The IIR digital filter is adopted to filter the original input current reference peak value, and a filter factor of the IIR digital filter is set to:

$$K = \frac{(F_{IN} - F_{OUT}) \cdot B}{F_{IN}} \quad ,$$

where, V indicates the filter factor, $F_{IN}$ indicates an input signal of the IIR digital filter, $F_{OUT}$ indicates an output signal of the IIR digital filter, and B indicates a proportional coefficient.

The IIR digital filter is configured to filter the original input current reference peak value, filter out the power frequency ripple and high-frequency interference in the original input current reference peak value to obtain the input current reference peak value, such that the input current reference peak value is closer to a straight line within a power frequency cycle. The setting of the filter factor in the IIR digital filter can change the IIR cut-off frequency according to the change rate of the input value, so as to achieve the control purpose that the faster the change rate is, the faster the response is, and the slower the change rate is, the smaller the fluctuation is. The filter technology with variable bandwidth is used to ensure the dynamic and fast response capability and the sinusoidal index of the input current control.

At step three, a current loop control is performed based on the input current reference peak value to determine a switch signal of a power electronic switch device in the PFC circuit, and the power electronic switch device is controlled to be turned on and off based on the control of the switch signal.

This embodiment takes a single-phase PFC circuit as an example to specifically illustrate the specific implementation process of a PFC fast dynamic response control method of the present application.

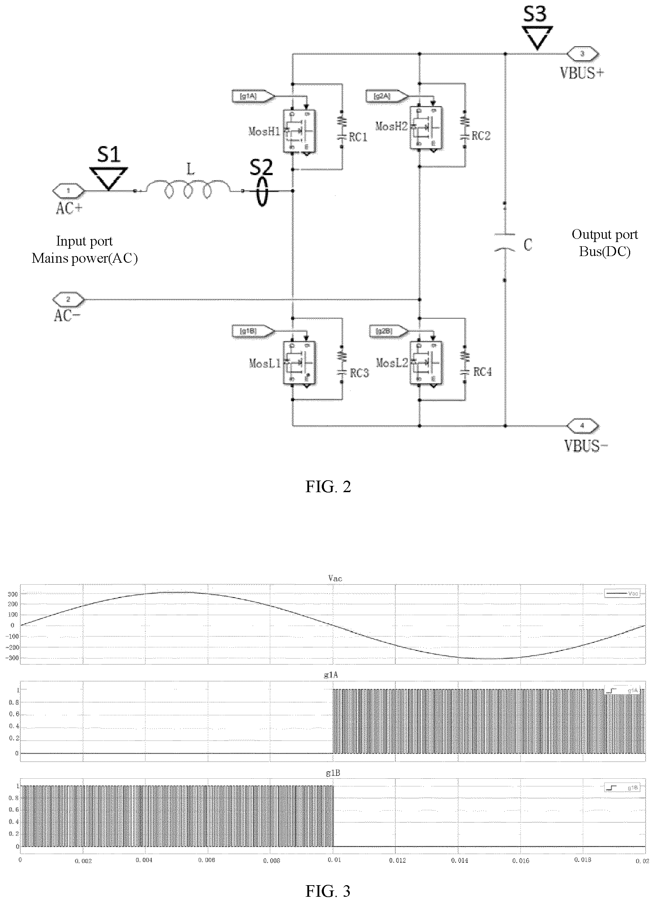

FIG. 2 shows a circuit topology of a single-phase PFC circuit.

At an input port: a sinusoidal voltage is input, a limited value range thereof is 85Vac-275Vac, and a frequency range thereof is 45Hz-75Hz.

At an output port: a DC voltage is output, a range thereof is 380Vdc-410Vdc.

Typical technical requirements: a power factor of the input port is greater than 0.99, and a maximum output power of the input port is 6.6KW;

Control requirements: based on the input and output characteristics, it can be seen that this topology needs to adopt the BOOST method for boost control, and the chopper bridge arm needs to be changed according to the polarity of the input voltage. At the same time, the input current needs to be controlled to be sinusoidal and the phase needs to follow the input voltage.

Description of analog signal sampling points: as shown in FIG. 2, sampling point S1 indicates for input voltage sampling, sampling point S2 indicates for input current sampling, and sampling point S3 indicates for output voltage sampling.

In FIG. 2, "L" indicates a power inductor at the input end, "C" indicates an energy storage capacitor at the output end (also known as a bus capacitor), "MosH1" and "MosL1" indicate BOOST bridge arms, and their PWM control timing are shown in FIG. 3, "MosH2" and "MosL2" indicate power frequency rectification bridge arms, and their PWM control timing are unipolar with synchronous rectification waveform mode.

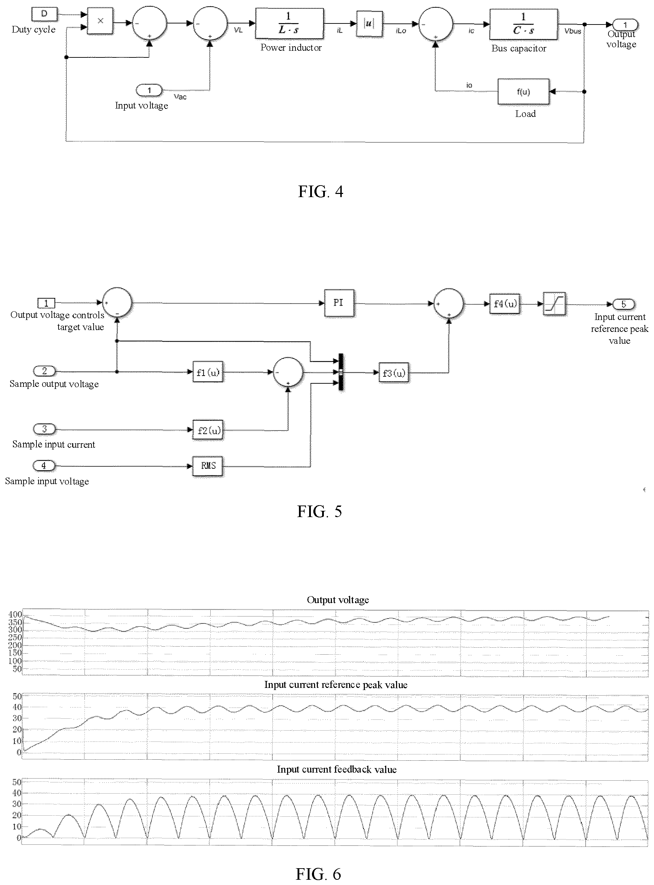

FIG. 4 is a mathematical model of the single-phase PFC circuit in this embodiment, and FIG. 5 is a control block diagram that adopts the method of the present application for control. In FIG. 5, PI indicates an output voltage controller 11 of the voltage loop, f1(u) indicates an estimation function of estimating the current value flowing through the bus capacitor, f2(u) indicates an estimation function of estimating the output current value of the PFC rectifier bridge, RMS indicates an effective value of the input voltage obtained by filtering the sampled input voltage and calculating the effective value, f3(u) indicates an estimation function of the feed-forward peak current, and f4(u) indicates a filter function. The control steps include:

(1) sampling/collecting an output voltage of the PFC for filtering and actual value calculating, where the output voltage is a voltage at both ends of the bus capacitor, and the current value flowing through the bus capacitor is estimated by performing differential processing on the output voltage and multiplying a differential coefficient;
(2) sampling/collecting an input current (a current of a power inductor) of the PFC for filtering and actual value calculating, multiplying the input current by the real-time PWM duty cycle as a core coefficient to estimate an output current value of the PFC rectifier bridge;
(3) subtracting the current value flowing through the bus capacitor from the output current value of the PFC rectifier bridge to estimate a load current;
(4) sampling/collecting an input voltage of the PFC input port for filtering and actual value calculating, multiplying the load current by the output voltage of the PFC, dividing by the effective value of the input voltage, and multiplying by a conversion factor to estimate the feed-forward peak current;
(5) accumulating the estimated value of the feed-forward peak current and the output of the output voltage controller 11 to obtain the original input current reference peak value;
(6) filtering the original input current reference peak value by an IIR digital filter and performing upper and lower limit process to obtain the input current reference peak value;
(7) performing current loop control based on the input current reference peak value to determine a switch signal of the power electronic switch device in the PFC circuit and control the power electronic switch device to be turned on and off.

In this embodiment, the traditional voltage PI control and the control method of the present application are simulated and compared. FIG. 6 is a dynamic response Matlab simulation waveform adopting the traditional voltage PI control. It can be seen from FIG. 6 that the output voltage drops greatly due to the slow response during load switching, and the input current harmonics are obviously large.

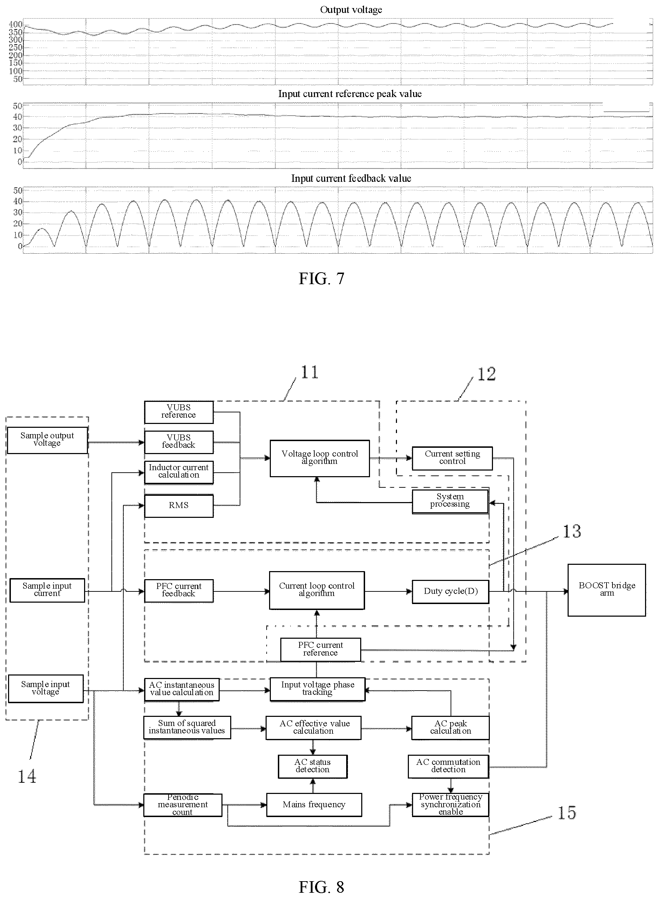

The dynamic response Matlab simulation waveform adopting the control method of the present application is shown in FIG. 7. It can be seen from FIG. 7 that when the load is switched rapidly, the bus voltage drop is small, the input current is within the controllable range, and the harmonics are small.

Second embodiment

As shown in FIG. 8, this embodiment provides a PFC fast dynamic response control system, the control system is configured to control a PFC circuit, and the PFC circuit includes a single-phase PFC circuit or a three-phase PFC circuit.

The control system includes,

an output voltage controller 11: configured to track and correct an output voltage of the PFC circuit, where the output voltage controller 11 includes a Proportional Integral (PI) controller, a Proportional Integral Derivative (PID) controller, etc.;
a load current feed-forward controller 12: including a feed-forward peak current estimator and an input current reference peak estimator, where the feed-forward peak current estimator is configured to estimate a feed-forward peak current, and the input current reference peak estimator is configured to accumulate an estimated value of the feed-forward peak current with an output of the output voltage controller 11 to determine the input current reference peak value; and
a current controller 13: configured to perform current loop control based on the input current reference peak value to determine a switch signal of a power electronic switch device in the PFC circuit and control the power electronic switch device to be turned on and off.

In some embodiments,

the feed-forward peak current estimator includes:
a sub-sampler 14: configured to sample circuit parameters and a control parameter of the PFC circuit, where the circuit parameters include an input voltage, an input current and an output voltage, and where the control parameter includes a real-time PWM duty cycle;
a data sub-processor, configured to respectively process the input voltage, the input current and the output voltage to obtain an effective value of the input voltage, an actual value of the output voltage and an actual value of the input current;
a load current sub-estimator: configured to estimate a load current value based on the actual value of the output voltage, the actual value of the input current and the real-time PWM duty cycle. In some embodiments, the load current sub-estimator includes:
a first submodule for bus capacitor current estimation, configured to obtain a current value flowing through a bus capacitor by differentiating the actual value of the output voltage and multiplying a differential coefficient;
a second submodule for PFC rectifier bridge output current estimation, configured to estimate an output current value of a PFC rectifier bridge by multiplying the actual value of the input current and the real-time PWM duty cycle; and
a third submodule for estimating a load current value: configured to subtract the current value flowing through the bus capacitor from the output current value of the PFC rectifier bridge to obtain the load current estimated value;
a feed-forward peak current sub-estimator: configured to obtain the estimated value of the feed-forward peak current based on the actual value of the output voltage, the load current estimated value and the effective value of the input voltage, where the feed-forward peak current sub-estimator configured to calculate the estimated value of the feed-forward peak current by the following formula:

$$i_f = \frac{i_o \cdot v_{bus}}{v_{ACRMS}} \cdot C$$

where $i_f$ indicates the estimated value of the feed-forward peak current, $i_o$ indicates the estimate value of the load current, $v_{bus}$ indicates the actual value of the output voltage, $v_{ACRMS}$ indicates the effective value of the input voltage, and C indicates a conversion coefficient.

The input current reference peak estimator includes:

an original input current reference peak sub-estimator configured to accumulate the estimated feed-forward peak current and an output of the output voltage controller 11 to obtain an original input current reference peak value; and
a sub-filter configured to filter the original input current reference peak value to obtain the input current reference peak value.

The sub-filter includes an IIR digital filter, and a filter factor of the IIR digital filter is set to:

$$K = \frac{(F_{IN} - F_{OUT}) \cdot B}{F_{IN}}$$

where, Vindicates the filter factor, $F_{IN}$ indicates an input signal of the IIR digital filter, $F_{OUT}$ indicates an output signal of the IIR digital filter, and Vindicates a proportional coefficient.

An input voltage detector 15 is included in FIG. 8, which is configured to detect the input voltage after the sub-sampler 14 samples the input voltage.

The control system of the present application is configured to implement a PFC fast dynamic response control method in the first embodiment, and the embodiment process is the same as that of the first embodiment, and will not be repeated in this embodiment.

The above-mentioned embodiments are merely examples, and do not limit the scope of the present invention. These embodiments can also be implemented in various other forms, and various omissions, substitutions, and changes can be made without departing from the scope of the technical idea of the present invention.

**Claims**

1. A Power Factor Correction, PFC, fast dynamic response control method comprises:

   constructing an output voltage controller, tracking and correcting an output voltage of a PFC circuit by the output voltage controller;
   constructing a load current feed-forward controller, by using the load current feed-forward controller, estimating a feed-forward peak current and accumulating the feed-forward peak current with an output of the output voltage controller to determine an input current reference peak value; and
   performing current loop control based on the input current reference peak value to determine a switch signal of a power electronic switch device in the PFC circuit, and controlling the power electronic switch device to be turned on and off based on the switch signal.

2. The PFC fast dynamic response control method according to claim 1, wherein estimating the feed-forward peak current comprises:

   sampling circuit parameters and a control parameter of the PFC circuit, wherein the circuit parameters comprise an input voltage, an input current and an output voltage, and the control parameter includes a real-time Pulse-Width Modulation, PWM, duty cycle;
   processing the input voltage, the input current and the output voltage respectively to obtain an effective value of the input voltage, an actual value of the output voltage and an actual value of the input current;

obtaining a load current estimated value based on the actual value of the output voltage, the actual value of the input current, and the real-time PWM duty cycle; and

obtaining an estimated value of the feed-forward peak current based on the actual value of the output voltage, the load current estimated value and the effective value of the input voltage.

3. The PFC fast dynamic response control method according to claim 2, wherein obtaining the load current estimated value comprises:

obtaining a current value flowing through a bus capacitor by differentiating the actual value of the output voltage and multiplying a differential coefficient;

obtaining an output current value of a PFC rectifier bridge by multiplying the actual value of the input current and the real-time PWM duty cycle; and

subtracting the current value flowing through the bus capacitor from the output current value of the PFC rectifier bridge to obtain the load current estimated value.

4. The PFC fast dynamic response control method according to claim 2, wherein the estimated value of the feed-forward peak current is obtained by following formula:

$$i_f = \frac{i_o \cdot v_{bus}}{v_{ACRMS}} \cdot C$$,

wherein $i_f$ indicates the estimated value of the feed-forward peak current, $i_o$ indicates the load current estimated value, $v_{bus}$ indicates the actual value of the output voltage, $v_{ACRMS}$ indicates the effective value of the input voltage, and C indicates a conversion coefficient.

5. The PFC fast dynamic response control method according to claim 1, wherein the input current reference peak value is obtained by:

accumulating the estimated feed-forward peak current and the output of the output voltage controller to obtain an original input current reference peak value, and

filtering the original input current reference peak value to obtain the input current reference peak value.

6. The PFC fast dynamic response control method according to claim 5, wherein an Infinite Impulse Response, IIR, digital filter is adopted to filter the original input current reference peak value, wherein a filter factor of the IIR digital filter is set to:

$$K = \frac{(F_{IN} - F_{OUT}) \cdot B}{F_{IN}}$$,

wherein, V indicates the filter factor, $F_{IN}$ indicates an input signal of the IIR digital filter, $F_{OUT}$ indicates an output signal of the IIR digital filter, and V indicates a proportional coefficient.

7. A PFC fast dynamic response control system configured to control a PFC circuit, wherein the control system comprises:

an output voltage controller (11): configured to track and correct an output voltage of the PFC circuit;

a load current feed-forward controller (12): comprising a feed-forward peak current estimator and an input current reference peak estimator, wherein the feed-forward peak current estimator is configured to estimate a feed-forward peak current, and the input current reference peak estimator is configured to accumulate an estimated value of the feed-forward peak current with an output of the output voltage controller (11) to determine an input current reference peak value; and

a current controller (13): configured to perform current loop control based on the input current reference peak value to determine a switch signal of a power electronic switch device in the PFC circuit and control the power electronic switch device to be turned on and off.

8. The PFC fast dynamic response control system according to claim 7, wherein the feed-forward peak current estimator comprises:

a sub-sampler (14): configured to sample circuit parameters and a control parameter of the PFC circuit, wherein the circuit parameters comprise an input voltage, an input current and an output voltage, and wherein the control parameter comprises a real-time PWM duty cycle;

a data sub-processor: configured to respectively process the input voltage, the input current and the output voltage to obtain an effective value of the input voltage, an actual value of the output voltage and an actual value of the input current;

a load current sub-estimator: configured to obtain a load current estimated value based on the actual value of the output voltage, the actual value of the input current and the real-time PWM duty cycle; and

a feed-forward peak current sub-estimator: configured to obtain the estimated value of the feed-forward peak current based on the actual value of the output voltage, the load current estimated value and the effective value of the input voltage.

9. The PFC fast dynamic response control system according to claim 8, wherein the load current sub-estimator comprises:

a first submodule for bus capacitor current estimation, configured to obtain a current value flowing through a bus capacitor by differentiating the actual value of the output voltage and multiplying a differential coefficient;

a second submodule for PFC rectifier bridge output current estimation: configured to estimate an output current value of a PFC rectifier bridge by multiplying the actual value of input current and real-time PWM duty cycle; and

a third submodule for estimating a load current value: configured to subtract the current value flowing through the bus capacitor from the output current value of the PFC rectifier bridge to obtain the load current estimated value.

10. The PFC fast dynamic response control system according to claim 8, wherein the feed-forward peak current sub-estimator configured to calculate the estimated value of the feed-forward peak current by the following formula:

$$ i_f = \frac{i_o \cdot v_{bus}}{v_{ACRMS}} \cdot C $$

wherein $i_f$ indicates the estimated value of the feed-forward peak current, $i_o$ indicates the load current estimated value, $v_{bus}$ indicates the actual value of the output voltage, $v_{ACRMS}$ indicates the effective value of the input voltage, and C indicates a conversion coefficient.

11. The PFC fast dynamic response control system according to claim 7, wherein the input current reference peak estimator comprises:

an original input current reference peak sub-estimator: configured to accumulate the estimated feed-forward peak current and the output of the output voltage controller (11) to obtain an original input current reference peak value; and

a sub-filter configured to filter the original input current reference peak value to obtain the input current reference peak value.

12. The PFC fast dynamic response control system according to claim 11, wherein the sub-filter comprises an Infinite Impulse Response, IIR, digital filter, and a filter factor of described IIR digital filter is set to:

$$ K = \frac{(F_{IN} - F_{OUT}) \cdot B}{F_{IN}} , $$

wherein, Vindicates the filter factor, $F_{IN}$ indicates an input signal of the IIR digital filter, $F_{OUT}$ indicates an output signal of the IIR digital filter, and Vindicates a proportional coefficient.

13. The PFC fast dynamic response control system according to claim 7, wherein the output voltage controller (11) comprises a Proportional-Integral, PI, controller.

14. The PFC fast dynamic response control system according to claim 7, wherein the PFC circuit comprises a single-phase PFC circuit or a three-phase PFC circuit.

FIG. 1

FIG. 2

FIG. 3

11

FIG. 4

FIG. 5

FIG. 6

Output voltage

Input current reference peak value

Input current feedback value

FIG. 7

FIG. 8

## INTERNATIONAL SEARCH REPORT

| | International application No. |
|---|---|
| | **PCT/CN2021/097149** |

**A.    CLASSIFICATION OF SUBJECT MATTER**

H02M 1/42(2007.01)i

According to International Patent Classification (IPC) or to both national classification and IPC

**B.    FIELDS SEARCHED**

Minimum documentation searched (classification system followed by classification symbols)

H02M

Documentation searched other than minimum documentation to the extent that such documents are included in the fields searched

Electronic data base consulted during the international search (name of data base and, where practicable, search terms used)

CNABS, CNTXT, DWPI, SIPOABS, CNKI: 功率因数, 校正, 修正, PFC, 电流, 电压, 前馈; power factor, correction, PFC, current, voltage, feedforward

**C.    DOCUMENTS CONSIDERED TO BE RELEVANT**

| Category* | Citation of document, with indication, where appropriate, of the relevant passages | Relevant to claim No. |
|---|---|---|
| X | CN 111725988 A (NANJING UNIVERSITY OF AERONAUTICS AND ASTRONAUTICS) 29 September 2020 (2020-09-29) description, paragraphs 5-39, and figures 1-3 | 1-14 |
| A | CN 111245216 A (BYD CO., LTD.) 05 June 2020 (2020-06-05) entire document | 1-14 |
| A | CN 109412403 A (BEIJING RESEARCH INSTITUTE OF PRECISE MECHATRONIC CONTROLS et al.) 01 March 2019 (2019-03-01) entire document | 1-14 |
| A | CN 111130334 A (SHENZHEN KCAN NEW ENERGY TECHNOLOGY CO., LTD.) 08 May 2020 (2020-05-08) entire document | 1-14 |
| A | US 2016352216 A1 (PACIFIC POWER SOURCE INC.) 01 December 2016 (2016-12-01) entire document | 1-14 |

☐ Further documents are listed in the continuation of Box C.    ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **25 November 2021** | **06 January 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/097149**

| Patent document cited in search report | | | Publication date (day/month/year) | Patent family member(s) | | | Publication date (day/month/year) |
|---|---|---|---|---|---|---|---|
| CN | 111725988 | A | 29 September 2020 | None | | | |
| CN | 111245216 | A | 05 June 2020 | None | | | |
| CN | 109412403 | A | 01 March 2019 | None | | | |
| CN | 111130334 | A | 08 May 2020 | None | | | |
| US | 2016352216 | A1 | 01 December 2016 | US | 9812951 | B2 | 07 November 2017 |

Form PCT/ISA/210 (patent family annex) (January 2015)